# EUROPÄISCHE PATENTSCHRIFT

(11) **EP 0 534 049 B1**
(45) Veröffentlichungstag und Bekanntmachung des Hinweises auf die Patenterteilung: **02.11.1994**
(21) Anmeldenummer: 92105668.5
(22) Anmeldetag: 02.04.1992
(51) Int. Cl.: B21D 43/10, B23Q 1/18

(54) **Vorrichtung zum Positionieren von Werkstücken**
Device for positioning work pieces
Dispositif de positionnement des pièces à travailler

(30) Priorität: 26.09.1991 DE 4132099
(43) Veröffentlichungstag der Anmeldung: 31.03.1993
(73) Patentinhaber: C. Behrens AG, D-31041 Alfeld/Leine (DE)
(72) Erfinder: Luther, Norbert, Dipl.-Ing., W-3223 Grünenplan (DE); Otto, Gerhard, Dipl.-Ing., W-3220 Alfeld/Leine (DE)
(74) Vertreter: Sobisch, Peter, Dipl.-Ing.

(56) Entgegenhaltungen:
- US-A- 4 297 927
- US-A- 4 382 395
- US-A- 4 523 749

## Beschreibung

Die Erfindung bezieht sich auf eine Vorrichtung zum Positionieren von Werkstücken entsprechend dem Oberbegriff des Anspruchs 1.

Zum Positionieren von Werkstücken gegenüber Bearbeitungsstationen für plattenartige metallische Werkstücke sind CNC-gesteuerte Koordinatentische in mannigfacher Form bekannt. Diese sind mit Werkstückspanneinrichtungen versehen, mittels welcher das Werkstück in den zueinander senkrechten Richtungen X, Y relativ zu der Bearbeitungsstation positionierbar ist. Um ein schnelles und insbesondere genaues Positionieren auch großer, schwerer Werkstücke zu erreichen, müssen bei der Konstruktion des Positioniersystems unter anderem Schwingungsprobleme beachtet werden, insbesondere bei weit ausgreifenden Bewegungen der Spannorgane der Spanneinrichtung, welches zur Verwendung relativ massereicher Konstruktionsformen führt oder zum Einsatz teurer hochfester Werkstoffe.

Massereiche Konstruktionen der benutzten Systeme erfordern jedoch mit Hinblick auf schnelle Positioniervorgänge bei großen Werkstücken entsprechend leistungsfähige Antriebe, welches sich kostenerhöhend auswirkt. Schließlich bestehen weitere Kriterien hinsichtlich der Ausbaufähigkeit des Positioniersystems. Es ist dies ein Gesichtspunkt, der unter anderem die Integrierbarkeit des Systems in größere Bearbeitungszentren betrifft, jedoch auch die - aus welchen Gründen auch immer - lineare Extrapolation des Verfahrbereichs der Spanneinrichtung.

Aus der DE 38 26 827 A1 ist eine Vorrichtung zum Positionieren von Werkstücken bekannt, welche aus einem ortsfesten Auflagetisch und einer, relativ zu diesem verfahrbaren Spanneinrichtung für ein plattenartiges Werkstück besteht. Der global rechteckförmige Auflagetisch erstreckt sich in den Richtungen X und Y relativ zu einer Stanzbearbeitungsstation und es besteht die Spanneinrichtung global aus einem auf einem, sich in X-Richtung erstreckenden Traggestell verfahrbaren Unterwagen, auf dem ein, die eigentlichen Spannorgane tragender Oberwagen in Richtung Y verfahrbar gehalten ist. Zur konstruktiven Realisierung der Verfahrbarkeit ist an dem Unterwagen ein erster Motor angebracht, der über ein Ritzel mit einer, an dem Traggestell befestigten Zahnstange im Eingriff steht, welch letztere sich in der Richtung X erstreckt. Der Unterwagen trägt darüber hinaus einen weiteren Motor, der über ein Ritzel mit einer, an dem Oberwagen befestigten weiteren Zahnstange im Eingriff steht, welche sich in Richtung Y erstreckt. Global ist der im wesentlichen rechteckig ausgebildete Oberwagen auf dem quadratischen Unterwagen im Bereich der Eckpunkte des letzteren aufgelagert, und zwar in unmittelbarer Nähe zu dessen Auflagerungspunkten auf dem Traggestell. Die einzelnen Spannorgane sind um ein gewisses Maß gegenüber dem Oberwagen in der Richtung Y verschiebbar. Nachdem das plattenartige Werkstück aufgrund der Ausbildung der Spanneinrichtung lediglich innerhalb der mit Borsten überzogenen Fläche des Auflagetisches verschiebbar ist und die Stand- bzw. Manövrierfläche für die Spanneinrichtung als Auflagefläche nicht zur Verfügung steht, ergibt sich ein vergleichsweise großer Standflächenbedarf für dieses System. Auch erfordert die Abstützung von Ober- und Unterwagen auf dem Traggestell insbesondere mit Hinblick auf eine schwingungsarme Handhabung schwerer Werkstücke im extrem ausgefahrenen Positionen eine besonders sorgfältige konstruktive Ausbildung, um Schwingungsprobleme und die hiermit zusammenhängenden Positionierungenauigkeiten zu vermeiden.

Es ist die Aufgabe der Erfindung, eine Vorrichtung der eingangs bezeichneten Gattung dahingehend auszugestalten, daß sich bei einfachem Aufbau, guter Zugänglichkeit von Bearbeitungsstationen, genauer Positioniermöglichkeit auch schwerer Werkstücke ein größtmöglicher Veschiebebereich des Werkstücks bei gleichzeitig geringem Standflächenbedarf der gesamten Vorrichtung ergibt. Gelöst ist diese Aufgabe bei einer gattungsgemäßen Vorrichtung durch die Merkmale des Kennzeichnungsteils des Anspruchs 1.

Erfindungswesentlich ist hiernach, daß in Abweichung von dem Stand der Technik die Oberseite des eine Führungseinrichtung für das Spannwerkzeug bildenden Wagens in gleicher Weise wie diejenige des Auflagetisches als Auflagefläche für das Werkstück zur Verfügung steht und erfindungsgemäß genutzt wird. Geht man davon aus, daß der genannte Wagen entlang der gesamten Erstreckung des Auflagetisches in der Richtung X verfahrbar ist, bedeutet dies, daß das Werkstück innerhalb einer Fläche verschiebbar ist, die der Summe der Standflächen von Auflagetisch und dem, den Wagen lagernden Traggestell im wesentlichen entspricht. Voraussetzung für diese weitgehende Nutzung ist, daß das Erfassungsorgan im wesentlichen über die gesamte Breitenerstreckung des Wagens in der Richtung Y verfahrbar ist. Bei gleichem Standflächenbedarf für die gesamten Vorrichtung, bestehend aus Auflagetisch und Traggestell ergeben sich im Vergleich zu einer bekannten Vorrichtung mit gleicher Verschiebefläche für das Werkstück bereits aus geometrischen Gründen bessere Abstützverhältnisse, da zur Überstreichung der gesamten Verschiebefläche geringere Verschiebungen und Ausladungen eines Erfassungsorgans des Werkstücks ausreichend sind.

Zur Verschiebung des Erfassungsorgans relativ zu dem Wagen ist gemäß den Merkmalen des Anspruchs 2 ein Führungsgestell vorgesehen, welches gegenüber der Struktur des Wagens verschiebbar ist, jedoch weitestgehend in diesen eingebunden ist. Letzteres bedeutet, daß das Führungsgestell keine wesentlichen, aus der Struktur des Wagens herausragenden Teile aufweist und somit nicht bzw. kaum zur Standflächenvergrößerung beiträgt.

Entsprechend den Merkmalen der Ansprüche 3 bis 5 können einem Führungsgestell bzw. einem Wagen mehrere Erfassungsorgane zugeordnet sein, die individuell oder auch gruppenweise in der Richtung Y verschiebbar sind. Insbesondere eine individuelle Verschiebbarkeit der Erfassungsorgane eröffnet optimale Möglichkeiten der Positionierung relativ zum Einwirkungsbreich des Werkstücks einer Bearbeitungsmaschine. Gleichzeitig eröffnet die Erfassung des Werkstücks durch mehrere Erfassungsorgane die Möglichkeit eines sehr genauen Positionierens, und zwar weitestgehend unbeeinflußt von Schwingungsproblemen.

Entsprechend den Merkmalen des Anspruchs 7 ist das Erfassungsorgan als Spannzange ausgebildet und sind die Auflageflächen von Auflagetisch und Wagen mit Borsten besetzt, welche die Auflageebene für das Werkstück bilden. Die Spannzange ist dazu bestimmt, den Rand eines plattenartigen Werkstücks zu erfassen, so daß sich in Verbindung mit Borsten die einfache Möglichkeit ergibt, ein auf den Borsten aufliegendes Werkstück im Randbereich durch Einfahren in die von den Borsten vertikal durchdrungene Zone zwecks Verschiebens zu erfassen . Es kommen jedoch grundsätzlich auch sonstige Erfassungsorgane in Betracht, die in irgendeiner Weise eine exakte und insbesondere reproduzierbare Halterung und Positionierung eines Werkstücks ermöglichen. Die Auflageebene kann alternativ auch durch Kugelelemente gebildet werden, die in die Oberseiten der Auflageflächen von Auflagetisch und Wagen drehbar angeordnet sind, wodurch ein besonders reibungsarmes Verschieben eines Werkstücks gewährleistet ist.

Die Ausbildung der Führung des Wagens gegenüber dem Traggestell sowie des Führungsgestells gegenüber dem Wagen durch die Elementenpaarung Schiene-Wälzkörper gestaltet sich insoweit vergleichweise einfach, als hierzu standardmäßig verfügbare Bauteile benutzt werden können.

Gemäß den Merkmalen des Anspruchs 10 sind die, zum Verschieben des Führungsgestells in der Richtung Y und des Wagens in der Richtung X benutzten Motoren NC-steuerbar ausgebildet. In gleicher Weise kann auch ein individueller und gruppenweiser Antrieb der Erfassungsorgane gegenüber dem Führungsgestell NC-steuerbar ausgebildet sein. Es eröffnet dies in Verbindung mit einer überlagerten, computergestützten Steuerungseinrichtung eine weitestgehend automatisierte programmgesteuerte Arbeitsweise.

Die Ausbildung der eigentlichen Antriebselemente des Wagens bzw. des Führungsgestells durch einen Spindelbetrieb bzw. nach Art eines Zahnstangenantriebs ist preiswert herstellbar, da auch hier weitestgehend Standardbauteile benutztbar sind und zeichnet sich darüber hinaus durch eine große Genauigkeit der Bewegungsführung aus. Grundsätzlich können jedoch sämtliche Antriebe in gleicher Weise auch als druckmittelbetätigte Antriebe, insbesondere hydraulische Antriebe ausgestaltet sein.

Das Traggestell ist gemäß den Merkmalen des Anspruchs 15 stirnseitig mit Hinblick auf seine Eignung zur Integration in Fertigungsstraßen dadurch ausgestaltet, das Verlängersmodulteile, die strukturell dem Traggestell im wesentlichen entsprechen, in einfachster Weise anschließbar sind, wodurch der Verfahrbereich des Wagens in der Richtung X entsprechend vergrößerbar ist.

Die Erfindung wird im folgenden unter Bezugnahme auf die in den Zeichnungen schematisch wiedergegebenen Ausführungsbeispiele näher erläutert werden. Es zeigen:
Fig. 1 eine Draufsicht auf eine erfindungsgemäße Vorrichtung;
Fig. 2 eine Seitenansicht der erfindungsgemäßen Vorrichtung entsprechend Pfeil II der Fig. 1;
Fig. 3 eine Vorderansicht einer erfindungsgemäßen Vorrichtung entsprechend Pfeil III der Fig. 1;
Fig. 4 eine Draufsicht auf eine erweiterte Ausführungsform der erfindungsgemäßen Vorrichtung.

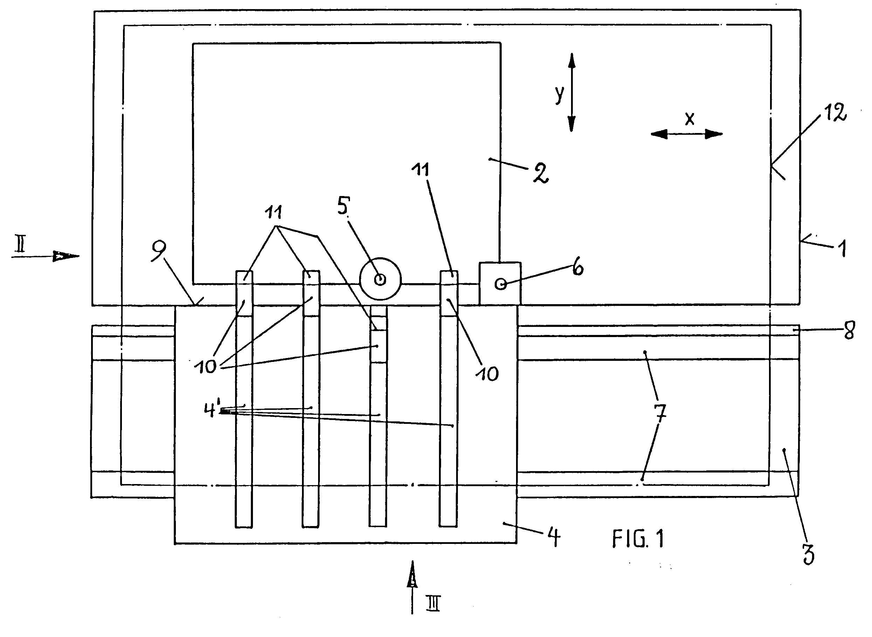

Die erfindungsgemäße Vorrichtung besteht gemäß Fig. 1 aus einem festen Auflagetisch 1 für ein Werkstück 2 und einem Traggestell 3, auf dem eine, im folgenden noch zu beschreibende Führungseinrichtung 4 nach Art eines Wagens verfahrbar gelagert ist.

Das Traggestell 3 und der Auflagetisch 1 stehen ortsfest auf einem Boden auf und es weist der Auflagetisch 1 eine global rechteckförmige Gestalt auf, deren Kanten sich in den Richtungen X und Y erstrecken. Das Traggestell 3 befindet sich mit geringem Abstand vor dem Auflagetisch 1 und erstreckt sich in der Richtung X. Der Auflagetisch 1 ist in zeichnerisch nicht dargestellter Weise oberseitig mit einem System von Borsten überzogen, die der unmittelbaren Auflagerung des Werkstücks 2 dienen.

Es steht der Auflagetisch 1 im unmittelbaren Eingriffsbereich von Arbeitsmaschinen, wobei schematisch eine Stanzbearbeitungsstation 5 und eine Laserbearbeitungsstation 6 angedeutet sind. Die Führungseinrichtung 4 dient der zweidimensionalen Verschiebung des Werkstücks 2 in den Richtungen X und Y relativ zu diesen Bearbeitungsstationen.

Das Traggestell 3 ist mit einem X-Führungssystem für die Führungseinrichtung 4 versehen, welches aus zwei, sich parallel und mit Abstand zueinander erstreckenden Führungsschienen bestehen kann, wobei sich parallel einer Schiene, und zwar im wesentlichen über deren gesamte Länge eine Zahnstange 8 erstreckt. Die Zahnstange 8 dient in noch zu erläuternder Weise dem Antrieb der Führungseinrichtung 4 entlang des X-Führungssystems 7.

Die Führungseinrichtung 4 ist kastenartig und global rechteckförmig ausgebildet, wobei sich deren Kanten wiederum parallel zu den Richtungen X und Y erstrecken. Die Anordnung des Traggestells 3 relativ zu dem Auflagetisch 1 erfolgt derart, daß sich die eine Kante 9 der Spanneinrichtung 4 parallel zu der Richtung X erstreckt und in unmittelbarer Nähe, d.h. unter geringstmöglichem Abstand zu der angrenzenden Kante des Auflagetisches 1 verläuft.

Die Führungseinrichtung 4 trägt in dem gezeigten Ausführungsbeispiel vier Spannvorrichtungen 10, die zur unmittelbaren Erfassung des Werkstücks 2 bestimmt und ausgestaltet sind. Die Spannvorrichtungen 10 sind in noch zu erläuternder Weise gegenüber der kastenartigen Führungseinrichtung 4 in Richtung der Pfeile Y verschiebbar, wobei diese individuell oder auch gruppenweise zusammengefaßt verschiebbar sein können. Wesentlich ist, daß von den Spannvorrichtungen 10 lediglich deren Spannzangen 11 oberseitig aus der Struktur der Führungsrichtung 4 herausragen, wohingegen sämtliche übrigen Funktionselemente der Spannvorrichtungen gegenüber der genannten Oberseite versenkt angeordnet sind. Dies bedeutet, daß für die Führung der Spannzangen 11 in Richtung Y in Fig. 1 schlitzartige Ausnehmungen 4' in der Oberseite der Führungseinrichtung 4 vorgesehen sind, wohingegen die übrigen Teile deren Oberseite der zum größten Teil als Auflagefläche für ein Werkstück zur Verfügung stehen. Es ist diese Oberseite im übrigen höhengleich zu dem Auflagetisch 1 angeordnet und in ihren, zur Auflage von Werkstücken bestimmten Flächenanteilen in gleicher Weise wie der Auflagetisch 1 mit Borsten bzw. mit Kugelelementen überzogen.

Diese Ausbildungsform von Führungseinrichtung 4 und Auflagetisch 1 bedeutet, daß in Verbindung mit der Verfahrbarkeit der Führungseinrichtung 4 in Richtung X eine strichpunktiert umrandete Fläche 12 als Verschiebefläche für das plattenartige Werkstück 2 zur Verfügung steht. Man erkennt, daß die erfindungsgemäße, als Koordinatentisch anzusehende Vorrichtung, bestehend aus Führungseinrichtung 4 nebst Traggestell 3 und Auflagetisch 1 sich bei gegebenen Standflächenbedarf durch eine, gegenüber dem eingangs dargelegten Stand der Technik wesentlich vergrößerte Positionierfläche für ein Werkstück 2 auszeichnet.

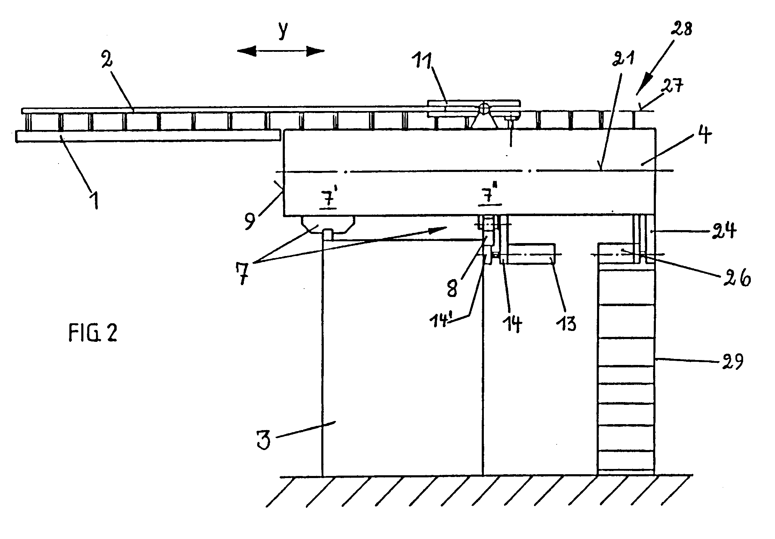

In den Fig. 2 bis 4 sind Funktionselemente, die mit denjenigen der Fig. 1 übereinstimmen, entsprechend beziffert, wobei auf eine diesbezügliche wiederholte Beschreibung verzichtet wird.

Fig. 2 läßt Einzelheiten des Antriebs der Führungseinrichtung 4 in Richtung X sowie des X-Führungssystems 7 erkennen.

Das Führungssystem 7 besteht global aus einer Elementenpaarung Schiene-Wälzkörper und es wird insoweit von handelsüblichen Standardbauteilen Gebrauch gemacht. Während bei dem linksseitigen Teil-Führungssystem 7' eine vertikale und horizontale Führung erfolgt, ist das rechtsseitige Teil-Führungssystem 7'' lediglich auf eine vertikale Führung hin ausgelegt. Für die Führungseinrichtung 4 sind insgesamt vier, in den jeweiligen Eckenbereichen angeordnete wälzkörpergeführte Unterstützungspunkte vorgesehen, über welche eine Auflagerung auf dem X-Führungssystem 7 erfolgt.

Mit 13 ist ein Motor bezeichnet, der ebenso wie ein zugeordnetes Getriebe 14 an der Führungseinrichtung 4 befestigt ist. Mit 14' ist ein Ritzel bezeichnet, welches an der Abtriebswelle des Getriebes 14 angeordnet ist und mit der Zahnstange 8 in Eingriff steht. Man erkennt, daß durch Betätigung des Motors 13, welcher vorzugsweise als NC-steuerbarer Servomotor ausgebildet ist, eine Bewegung der Führungseinrichtung 4 in X-Richtung möglich ist.

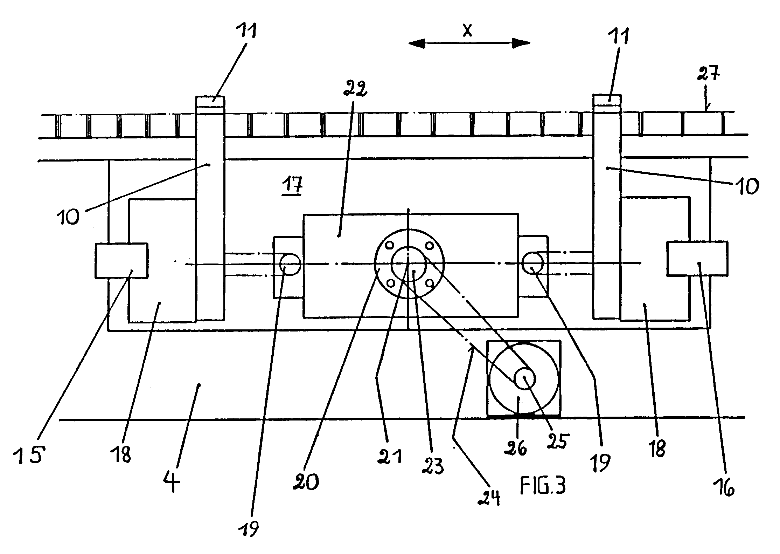

Zur Beschreibung des Antriebssystems der Spannvorrichtungen 10 wird im folgenden auf die Fig. 2 und 3 Bezug genommen.

Mit 15, 16 sind zwei, sich mit Abstand und parallel zueinander sowie in Richtung Y erstreckende Schienen bezeichnet, die mit der Führungseinrichtung 4 in fester Verbindung stehen und auf denen unter Zwischenanordnung von zeichnerisch nicht dargestellten Wälzkörpern ein Führungsgestell 17 gelagert ist. Mit 18 sind jeweils die, die Wälzkörper aufnehmenden Lagerungen des Führungsgestells 17 bezeichnet. Gegenüber diesen Führungsgestell 17 sind die einzelnen Spannvorrichtungen 10 parallel zu den Schienen 15, 16 verschiebbar, und zwar mittels zu diesem Zweck vorgesehener Kolben-Zylinder-Einheiten 19. Auf eine Darstellung von den Spannvorrichtungen 10 zugeordneten individuellen Führungseinrichtungen ist jedoch verzichtet worden. Wesentlich ist, daß in dem gezeigten Ausführungsbeispiel gemäß Fig. 3 jede der beiden dort gezeigten Spannvorrichtungen 10 unabhängig in Y-Richtung, d.h. senkrecht zur Zeichenebene der Fig. 3 gegenüber der Führungseinrichtung 4 verschiebbar ist. Nachdem ein plattenartiges Werkstück im Regelfall stets von mehreren Spannzangen 11 während der Bearbeitung gehalten ist, wird durch die Verschiebbarkeit der Spannvorrichtungen 10 gegenüber der Führungseinrichtung 4 erreicht, daß während des Verschiebens in X-Richtung Kollisionen mit den Werkzeugen von Bearbeitungsstationen, hier der Stanz- und der Laserbearbeitungsstation 5,6 durch entsprechende Aussteuerung einzelner Spannvorrichtungen 10 vermieden werden können. Gleiches gilt für den Fall von Bearbeitungen des Werkstücks 2 im unmittelbaren Erfassungsbereich einer Spannvorrichtung 10.

Zum Vorschub des die Spannvorrichtungen 10 tragenden Führungsgestells 17 gegenüber der Führungseinrichtung 4 dient ein Spindeltrieb 20, der in an sich bekannter Weise aus einer Gewindespindel und einer mit dieser im Eingriff stehenden Gewindemutter oder dergleichen besteht. Mit 21 ist in den Fig. 2 und 3 die Achse der Gewindespindel bezeichnet, die in zeichnerisch nicht dargestellter Weise an der Führungseinrichtung 4 gelagert ist. Die Spindelmutter ist in einem, von der Achse 21 durchdrungenen Gehäuse 22 gelagert, welches einen Bestandteil des Führungsgestells 17 bildet. Mit 23 ist ein, auf der Gewindespindel angeordnetes Zahnrad bezeichnet, welches über einen Zahnriemen 24 mit dem Ritzel 25 eines Motors 26 in Verbindung steht. Der Motor 26 ist vorzugsweise als NC-steuerbarer Servomotor ausgebildet und seinerseits an der Führungseinrichtung 4 befestigt.

Man erkennt, daß durch Betätigung des Motors 26 das Führungsgestell 17 gegenüber der Spanneinrichtung 4 in der Richtung Y und somit entlang der Schienen 15,16 verfahrbar ist.

Man erkennt anhand der Fig. 2,3 ferner, daß die Oberseiten von Auflagetisch 1 und Spanneinrichtung 4 sich auf einem Niveau befinden, so daß sich aufgrund des Borstenbesatzes dieser Oberseiten eine gemeinsame Auflageebene 27 ergibt, die sich ausgehend von dem Auflagetisch 1 bis über die Führungseinrichtung 4 erstreckt. Die Spannvorrichtungen 10 sind gegenüber dieser Auflageebene 27 versenkt angeordnet, wie insbesondere in Fig. 2 erkennbar ist, so daß sich in der Auflageebene 27 lediglich die Spannzangen 11 befinden, welche praktisch bis an den Randbereich 28 der Führungseinrichtung 4 verfahrbar sind, so daß sich die vergleichweise große, in Fig. 1 gezeigte Fläche 12 ergibt, innerhalb der das Werkstück 2 verschiebbar ist. Man erkennt, daß diese Fläche 12 praktisch mit der Standfläche von Auflagetisch 1 und Traggestell 3 übereinstimmt. Bezogen auf den eingangs dargelegten Stand der Technik steht somit ein erheblich größerer Teil der Standfläche als Verschiebefläche für das Werkstück zur Verfügung.

Mit 29 ist ein Kabelsystem zur Energieversorgung sowie zur Steuerung der Motoren 13,26, der Kolben-Zylinder-Einheiten 19 sowie der Spannvorrichtungen 10 bezeichnet, welches diese mit der Führungseinrichtung 4 bewegten Antriebssysteme mit einer ortsfest angeordneten Energieversorgung bzw. Steuerungseinrichtung verbindet.

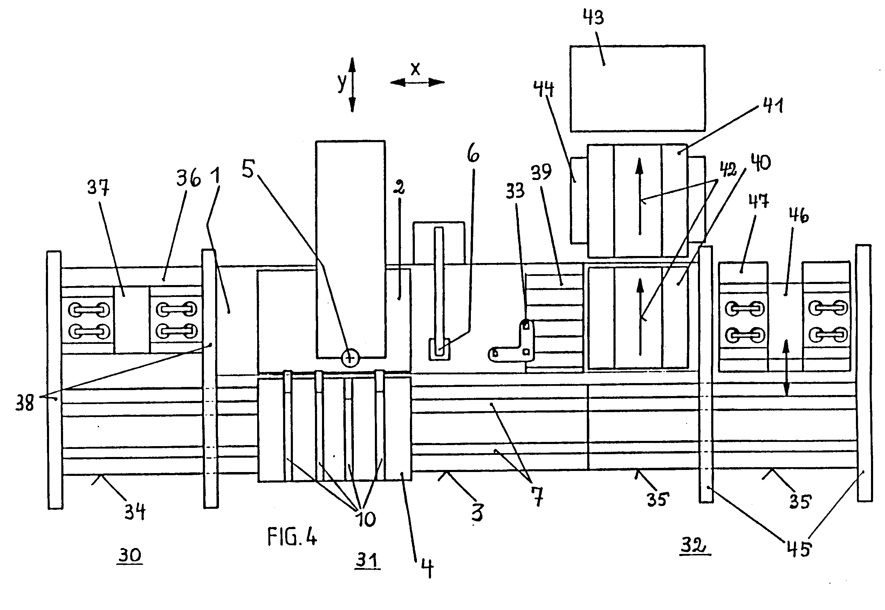

Fig. 4 zeigt die Zuordnung einer erfindungsgemäßen Vorrichtung zu einem Bearbeitungszentrum, bestehend aus einer mit einem Rohblechlager zusammenwirkenden Beladestation 30, einer Bearbeitungsstation 31 und einer mit einem Fertigteillager zusammenwirkenden Entladestation 32.

Die Bearbeitungsstation 31 wird durch eine Stanzbearbeitungsstation 5, eine Laserbearbeitungsstation 6 und eine Fertigteilfreischneidevorrichtung 33 gebildet, die materialflußmäßig hintereinander entlang eines Auflagetisches 1 angeordnet sind. Das, die Führungseinrichtung 4 lagernde Traggestell 3 ist durch Hinzufügung von Verlängerungsmodulen 34, 35 jeweils bis in die Beladestation 30 sowie die Entladestation 32 hinein verlängert. Die Verlängerungsmodule 34, 35 entsprechen strukturell dem Traggestell 3, d.h. sie sind mit entsprechenden X-Führungssystemen nebst Zahnstange 8 (Fig. 2) versehen. Die Führungseinrichtung 4 ist somit parallel zu der Richtung X über die gesamte Länge des Bearbeitungszentrums, nämlich von der Beladestation 30 bis zu der Entladestation 32 geradlinig verfahrbar.

Mit 36 ist ein Rohblechstapel in der Beladestation 30 bezeichnet, von welchem mittels einer schematisch angedeuteten Beladevorrichtung 37 einzelne Bleche aufgenommen und von den Spannvorrichtungen 10 der Führungseinrichtung 4 erfaßt werden können. Die Beladevorrichtung 37 kann zu diesem Zweck entlang der mit Abstand und parallel zueinander in Y-Richtung verlaufenden Führungen 38 verfahrbar sein.

Mit 39 ist eine Fertigteilentsorgungsrampe bezeichnet, die in X-Richtung geneigt verläuft und der Überführung von Fertigteilen in Richtung auf ein Förderband 40 hin dient. Mit 41 ist ein anhebbares weiteres, in gleicher Richtung wie das Förderband 40 förderndes Förderband bezeichnet, so daß die, in Richtung der Pfeile 42 über die Entsorgungsrampe 39 gleitenden Fertigteile über die Förderbänder 40, 41 wahlweise in eine Fertigteilbox 43 oder auf einen Fertigteilstapel 44 überführbar sind.

Mit 45 sind wiederum zwei, mit Abstand parallel zueinander und in Y-Richtung verlaufende Führungen bezeichnet, die der Lagerung einer schematisch wiedergegebenen Entladevorrichtung 46 dienen. Mittels der, in Y-Richtung verfahrbaren Entladevorrichtung 46 sind einzelne Fertigteile auf einen Fertigteilstapel 47 überführbar.

Man erkennt, daß das oben beschriebene Bearbeitungszentrum insbesondere aufgrund der mittels der Führungseinrichtung 4 NC-steuerbaren Positionierung von Werkstücken 2 eine automatisierte Bearbeitung ganzer Werkstückserien ausgehend von einer mit Rohblechen bestückten Beladestation 30 bis zu einer Fertigteile ausstoßenden Entladestation 32 ermöglicht. Man erkennt ferner, daß aufgrund der Ausbildung der Führungseinrichtung 4 deren Spannzangen einen vergleichsweise großen Flächenanteil der für die Aufstellung des Bearbeitungszentrums benötigten Standfläche überfahren können, womit nicht nur eine genau, präzise Handhabung auch vergleichsweise großer Werkstücke möglich ist, sondern ferner der erforderliche Standflächenbedarf kleinstmöglich gehalten wird. Gleichzeitig ist eine gute, insbesondere auch seitliche Zugänglichkeit der einzelnen Bearbeitungsstationen gegeben.

## Patentansprüche

1. Vorrichtung zum Positionieren von plattenartigen Werkstücken (2), bestehend aus einem ortsfest aufgestellten Auflagetisch (1) und wenigstens einem, gegenüber diesem in zwei zueinander senkrechten Richtungen (X,Y) verfahrbaren Erfassungsorgan für das Werkstück (2), wobei zur Führung des Erfassungsorgans in der Richtung (X) parallel zu der einen Kante (9) des Auflagetisches (1) ein Traggestell (3) mit einem X-Führungssystem (7) vorgesehen ist, auf dem ein Wagen in der Richtung (X) verschiebbar aufgelagert ist, dadurch gekennzeichnet, daß die Oberseite des Wagens als zu dem Auflagetisch (1) niveaugleiche Auflagefläche bestimmt und ausgestaltet ist und daß das Erfassungsorgan gegenüber dem Wagen in der Richtung (Y) über dessen gesamte Breitenerstreckung verfahrbar angeordnet ist.

2. Vorrichtung nach Anspruch 1, dadurch gekennzeichnet, daß zur Verschiebung des Erfassungsorgans in der Richtung (Y) gegenüber dem Wagen ein in letzterem verschiebbar angeordnetes Führungsgestell (17) vorgesehen ist und daß das Führungsgestell (17) weitestgehend in die Struktur des Wagens eingebunden ist.

3. Vorrichtung nach Anspruch 1 oder 2, dadurch gekennzeichnet, daß einem Wagen mehrere, in der Richtung (Y) verschiebbare Erfassungsorgane zugeordnet sind.

4. Vorrichtung nach Anspruch 3, dadurch gekennzeichnet, daß die Erfassungsorgane individuell in der Richtung (Y) verschiebbar sind.

5. Vorrichtung nach Anspruch 3, dadurch gekennzeichnet, daß die Erfassungsorgane gruppenweise in der Richtung (Y) verschiebbar sind.

6. Vorrichtung nach einem der vorangegangenen Ansprüche 2 bis 5, dadurch gekennzeichnet, daß die mehreren Erfassungsorgane gegenüber dem Führungsgestell (17) individuell oder gruppenweise in der Richtung (Y) verschiebbar sind.

7. Vorrichtung nach einem der vorangegangenen Ansprüche 1 bis 6, dadurch gekennzeichnet, daß das Erfassungsorgan als Spannzange (11) oder dergleichen ausgebildet ist und daß die Auflageflächen von Auflagetisch (1) und Wagen mit Borsten oder Kugelrollen besetzt sind, welche die Auflageebene (27) für das Werkstück (2) bilden.

8. Vorrichtung nach einem der vorangegangenen Ansprüche 2 bis 7, dadurch gekennzeichnet, daß die Lagerungen des Wagens auf dem X-Führungssystem (7) des Traggestells (3) sowie des Führungsgestells (17) auf dem Wagen durch eine Elementenpaarung Schiene-Wälzkörper gebildet sind.

9. Vorrichtung nach Anspruch 8, dadurch gekennzeichnet, daß der Wagen einen quadratischen oder rechteckigen Grundriß aufweist und im Bereich seiner vier Ecken aufgelagert ist.

10. Vorrichtung nach einem der vorangegangenen Ansprüche 2 bis 9, dadurch gekennzeichnet, daß zumindest zur Verschiebung des Führungsgestells (17) in der Richtung (Y) und des Wagens in der Richtung (X) NC-steuerbare Motoren (13,26) vorgesehen sind.

11. Vorrichtung nach Anspruch 10, dadurch gekennzeichnet, daß die mit den NC-steuerbaren Motoren (13,26) in Wirkverbindung stehenden Antriebe des Führungsgestells (17) sowie des Wagens auf der Elementenpaarung Zahnstange (8)-Ritzel beruhen oder als Spindeltriebe ausgestaltet sind.

12. Vorrichtung nach einem der vorangegangenen Ansprüche 4 bis 11, dadurch gekennzeichnet, daß der individuelle oder gruppenweise Antrieb der Erfassungsorgane gegenüber dem Wagen als druckmittelbetätigbarer Antrieb, insbesondere als hydraulischer Antrieb ausgestaltet ist.

13. Vorrichtung nach einem der vorangegangenen Ansprüche 10 bis 12, dadurch gekennzeichnet, daß die NC-steuerbaren Motoren (13,26) an dem Wagen befestigt sind.

14. Vorrichtung nach einem der vorangegangenen Ansprüche 1 bis 13, dadurch gekennzeichnet, daß die zur Positionierung eines Werkstücks zur Verfügung stehende Fläche (12) im wesentlichen der Standfläche von Auflagetisch (1) und Traggestell (3) entspricht und daß das Traggestell (3) und der Auflagetisch (1) vorzugsweise eine gleiche Längenerstreckung in der Richtung (X) aufweisen.

15. Vorrichtung nach einem der vorangegangenen Ansprüche 1 bis 14, dadurch gekennzeichnet, daß das Traggestell (3) stirnseitig zur Anknüpfung von im wesentlichen gleich beschaffenen Verlängerungsmodulen (34,35) bestimmt und ausgestaltet ist.

16. Bearbeitungszentrum mit einer Vorrichtung entsprechend einem der vorangegangenen Ansprüche 1 bis 15, gekennzeichnet durch eine Beladestation (30), eine Bearbeitungsstation (31) und eine Entladestation (32), die materialflußmäßig hintereinander angeordnet sind, wobei ein wenigstens ein Erfassungsorgan für ein Werkstück (2) tragender Wagen entlang sämtlicher Stationen (30,31,32), nämlich in der Richtung (X) verfahrbar gehalten ist, wobei dem Auflagetisch (1) mehrere Bearbeitungsmaschinen zugeordnet sind, deren jeweiliger Einwirkungsbereich auf das Werkstück (2) in der Fläche des Auflagetisches liegt.

17. Bearbeitungszentrum nach Anspruch 16, dadurch gekennzeichnet, daß die Beladestation (30) ein Rohblechlager und die Entladestation (32) ein Fertigteillager umfaßt, daß Hebe- und/oder Förderorgane vorgesehen sind, um ein Rohblech dem Erfassungsorgan zu übergeben bzw. ein Fertigteil in Richtung auf das Fertigteillager hin zu überführen.

18. Bearbeitungszentrum nach einem der vorangegangenen Ansprüche 16 oder 17, dadurch gekennzeichnet, daß die zur Verschiebung eines Werkstücks zur Verfügung stehende Fläche der Summe der Standflächen von Beladestation (30), Bearbeitungsstation (31) und Entladestation (32) entspricht.

## Claims

1. Apparatus for the positioning of plate-like workpieces (2), comprising a stationary support table (1) and at least one gripping member for the workpiece (2) displaceable relative to the table in two mutually perpendicular directions (X, Y), wherein a carrier frame (3) having an X-axis guidance system (7) is provided for the guidance of the gripping member in the direction (X) parallel to the one edge (9) of the support table (1), with a carriage being mounted to be displaceable in the direction (X) on the carrier frame, characterised in that the upper side of the carriage is arranged and shaped to be a support surface level with the support table (1), and that the gripping member is arranged to be displaceable relative to the carriage in the direction (Y) over the full carriage width.

2. Apparatus according to claim 1, characterised in that in order to displace the gripping member in the direction (Y) relative to the carriage there is provided a guide frame (17) which is arranged to be displaceable in the carriage, and that the guide frame (17) is substantially integrated into the structure of the carriage.

3. Apparatus according to claim 1 or 2, characterised in that a plurality of gripping members displaceable in the direction (Y) are associated with a carriage.

4. Apparatus according to claim 3, characterised in that the gripping members are displaceable individually in the direction (Y).

5. Apparatus according to claim 3, characterised in that the gripping members are displaceable in groups in the direction (Y).

6. Apparatus according to one of the preceding claims 2 to 5, characterised in that the plurality of gripping members are displaceable relative to the guide frame (17) in the direction (Y) individually or in groups.

7. Apparatus according to one of the preceding claims 1 to 6, characterised in that the gripping member is formed as a clamping tongs (11) or the like and that the support surface of the support table (1) and carriage are fitted with brushes or ball rollers which define the support plane (27) for the workpiece (2).

8. Apparatus according to one of the preceding claims 2 to 7, characterised in that the bearings for the carriage on the X-axis guidance system (7) of the support frame (3) as well as for the guide frame (17) on the carriage are formed by a unit pair of rails and rolling members.

9. Apparatus according to claim 8, characterised in that the carriage has a square or rectangular outline and is supported in the region of its four corners.

10. Apparatus according to one of the preceding claims 2 to 9, characterised in that NC-controllable motors (13, 26) are provided at least for the displacement of the guide frame (17) in the direction (Y) and of the carriage in the direction (X).

11. Apparatus according to claim 10, characterised in that the drive for the guide frame (17), which drive is actively connected to the NC-controllable motors (13, 26), as well as the drive for the carriage, is derived from the unit pair of rack and pinion means (8) or as a spindle drive.

12. Apparatus according to one of the preceding claims 4 to 11, characterised in that the individual or group driving of the gripping members relative to the carriage is effected by a drive actuatable by pressure means, especially as a hydraulic drive.

13. Apparatus according to one of the preceding claims 10 to 12, characterised in that the NC-controllable motors (13, 26) are fixed to the carriage.

14. Apparatus according to one of the preceding claims 1 to 13, characterised in that the surface (12) which is used for positioning a workpiece corresponds substantially to the support surface of the support table (1) and support frame (3), and that the support frame (3) and the support table (1) preferably have the same length in the direction (X).

15. Apparatus according to one of the preceding claims 1 to 14, characterised in that the support frame (3) is arranged and shaped at the ends for contact by substantially identical extension modules (34, 35).

16. A workcentre comprising an apparatus corresponding to one of the preceding claims 1 to 15, characterised by a loading station (30), a working station (31) and a discharge station (32), which are arranged in sequence for the throughflow of material, wherein a carriage carrying at least one gripping member for a workpiece (2) is displaceable along several stations (30, 31, 32), namely in the direction (X), and wherein the support table (1) has a plurality of working machines associated therewith whose respective active regions on the workpiece (2) lie within the surface area of the support table.

17. A workcentre according to claim 16, characterised in that the loading station (30) includes a raw material depot and the discharge station (32) includes a finished part depot, that lifting and/or conveyor means are provided in order to transfer a raw material piece to the gripping member or to transfer a finished part in the direction towards the finished part depot.

18. A workcentre according to one of the preceding claims 16 or 17, characterised in that the surface area available for the displacement of a workpiece corresponds to the sum of the surface areas of loading station (30), working station (31) and discharge station (32).

## Revendications

1. Dispositif de positionnement de pièces à usiner (2) en forme de plaques, constitué d'une table porte-pièce (1) et d'au moins un organe de fixation de la pièce à usiner (2), pouvant se déplacer par rapport à cette table dans deux directions (X, Y) perpendiculaires entre elles, étant entendu que, pour le guidage de l'organe de fixation dans la direction (X), parallèle à l'une des arêtes (9) de la table porte-pièce (1), il est prévu un châssis porteur (3) comportant un système de guidage X (7), sur lequel un chariot est monté de façon à pouvoir se déplacer dans la direction (X), caractérisé en ce que la face supérieure du chariot est prévue et conçue comme surface de réception au même niveau que la table porte-pièce (1), et en ce que l'organe de fixation est disposé de façon à pouvoir se déplacer, par rapport au chariot, dans la direction (Y), sur tout l'espace occupé par la largeur de ce chariot.

2. Dispositif suivant la revendication 1, caractérisé en ce que, pour le déplacement de l'organe de fixation, dans la direction (Y) par rapport au chariot, il est prévu un châssis de guidage (17), disposé de façon à pouvoir se déplacer dans se dernier et en ce que le châssis de guidage (17) est aussi largement que possible engagé dans la structure du chariot.

3. Dispositif suivant la revendication 1 ou la revendication 2, caractérisé en ce qu'à un chariot sont associés plusieurs organes de fixation pouvant se déplacer dans la direction (Y).

4. Dispositif suivant la revendication 3, caractérisé en ce que les organes de fixation peuvent se déplacer individuellement dans la direction (Y).

5. Dispositif suivant la revendication 3, caractérisé en ce que les organes de fixation peuvent se déplacer groupés dans la direction (Y).

6. Dispositif suivant l'une quelconque des revendications précédentes 2 à 5, caractérisé en ce que tous les organes de fixation peuvent se déplacer par rapport au châssis de guidage (17), individuellement ou groupés, dans la direction (Y).

7. Dispositif suivant l'une quelconque des revendications précédentes 1 à 6, caractérisé en ce que l'organe de fixation est réalisé sous la forme d'une pince de serrage (11) ou similaire, et en ce que les surfaces d'appui de la table porte-pièce (1) et du chariot sont recouvertes de brosses ou de roulements à billes qui servent de surface d'appui (27) pour la pièce à usiner (2).

8. Dispositif suivant l'une quelconque des revendications précédentes 2 à 7, caractérisé en ce que le montage du chariot sur le système de guidage X du châssis porteur (3) et le montage du châssis de guidage (17) sur le chariot sont réalisés par des organes appariés comportant rails et corps de galets de roulement.

9. Dispositif suivant la revendication 8, caractérisé en ce que le chariot présente une section d'assise carrée ou rectangulaire et est en appui dans la zone de ses quatre coins.

10. Dispositif suivant l'une quelconque des revendications précédentes 2 à 9, caractérisé en ce que des moteurs à commande numérique (13, 26) sont prévus au moins pour le déplacement du châssis de guidage (17) dans la direction (y) et pour le déplacement du chariot dans la direction (X).

11. Dispositif suivant la revendication 10, caractérisé en ce que l'entraînement du châssis de guidage (17), ainsi que celui du chariot, entraînements qui sont en liaison avec les moteurs à commande numérique (13, 26), dépendent fonctionnellement d'un ensemble comportant pignon et crémaillère (8), ou sont réalisés sous la forme d'un entraînement par vis sans fin.

12. Dispositif suivant l'une quelconque des revendications précédentes 4 à 11, caractérisé en ce que l'entraînement, individuel ou groupé, des organes de fixation par rapport au chariot est réalisé sous la forme d'un entraînement actionné par un fluide sous pression, en particulier un entraînement hydraulique.

13. Dispositif suivant l'une quelconque des revendications précédentes 10 à 12, caractérisé en ce que les moteurs à commande numérique (13, 26) sont fixés sur le chariot.

14. Dispositif suivant l'une quelconque des revendications précédentes 1 à 13, caractérisé en ce que la surface (12), dont on dispose pour le positionnement d'une pièce à usiner, correspond essentiellement à la surface d'encombrement de la table porte-pièce (1) et du châssis porteur (3), et en ce que le châssis porteur (3) et la table porte-pièce (1) présentent, de préférence, le même encombrement longitudinal dans la direction (X).

15. Dispositif suivant l'une quelconque des revendications précédentes 1 à 14, caractérisé en ce que le châssis porteur (3) est déterminé et conçu, côté frontal, pour le raccordement de modules de prolongation (34, 35), essentiellement de même structure.

16. Centre d'usinage comportant un dispositif suivant l'une quelconque des revendications précédentes 1 à 15, caractérisé par un poste de chargement (30), un poste d'usinage (31) et un poste d'évacuation (32), disposés les uns à la suite des autres dans le sens de déplacement des pièces, étant entendu qu'un chariot portant au moins un organe de fixation pour une pièce à usiner (2) est maintenu de façon à pouvoir circuler le long des différents postes (30, 31, 32), c'est-à-dire dans la direction (X), en associant à la table porte-pièce (1) plusieurs machines d'usinage, dont chaque zone d'action sur la pièce à usiner est située dans la surface de la table porte-pièce.

17. Centre d'usinage suivant la revendication 16, caractérisé en ce que le poste de chargement (30) comporte un magasin de pièces brutes, et le poste d'évacuation (32) comporte un magasin de pièces terminées, en ce que des organes de levage et/ou de transport sont prévus pour transférer une tôle brute à l'organe de fixation, ou pour transférer une pièce terminée dans la direction du magasin de pièces terminées.

18. Centre d'usinage suivant l'une des revendications précédentes 16 ou 17, caractérisé en ce que la surface dont on dispose pour le déplacement d'une pièce à usiner correspond à la somme des surfaces d'encombrement des postes de chargement (30), d'usinage (31) et d'évacuation (32).
